# EUROPEAN PATENT APPLICATION

(11) **EP 1 130 804 A1**
(43) Date of publication of application: **05.09.2001**
(21) Application number: 00850098.5
(22) Date of filing: 13.06.2000
(51) Int. Cl.: H04B 10/08

(54) **Optical transmission system automatic laser shut down**

(71) Applicant: Telefonaktiebolaget L M Ericsson (Publ), 126 25 Stockholm (SE)
(72) Inventor: Persson, Lars, 117 68 Stockholm (SE); Lundberg, Anders, 184 41 Aakersberg (SE)
(74) Representative: Wideberg, Olle Sven

(57) **Abstract**

The present invention relates to a method to reduce light leakage in an optical system comprising a first terminal and a second terminal. The terminals are prepared to communicate bi-directionally using light beams sent in optical fibers via light amplifiers. The method comprises the following steps:
- Detecting at the second terminal TB, loss of optical information sent from the first terminal TA, due to an error BR.
- Sending an APSD-message 3 from the second terminal (TB), via one of the optical fibers f1, f2, towards the first terminal TA.
- Effecting all light amplifiers L0, L1, L2, L3 receiving the APSD-message 3 to transmit light power towards the first terminal TA at a defined eye safe power level.

## Description

### TECHNICAL FIELD OF THE INVENTION

The present invention relates to a method and an arrangement to reduce leakage of light radiation in an optical communication system.

### DESCRIPTION OF RELATED ART

Laser diodes are used in optical communication systems for high-speed data transmission. A transmission device used in an optical communication system is equipped with a light amplifying device which amplifies a light beam in an optical fiber in order to enable a long-distance light transfer. A telecommunication line often comprises at least one terminal station having an optical signal transmitter and an optical signal receiver. Fiber breaks may cause leakage of laser radiation. The radiation can seriously damage a human eye and it is of utmost importance that light amplifying devices immediately are shutdown after a break. An automatic protection device can be used for shutting down said transmitter in case of no occurring optical signal. In the international application WO 94/28647 means for detecting presence of light energy are disclosed and also means for shutting down an amplifier and thereby interrupt or reduce emission of light energy in order to avoid hazard to people repairing the transmission section. A shut down mechanism is known in client networks communicating with each other via transmitters and receivers. Automatic laser shutdown for example, is known for usage at the optical line interface between two SDH network elements (SDH: Synchrony Digital Hierarchy). Information is transported from the first SDH-network to the second SDH-network. After detection of information loss by the second SDH-network due to a fiber break, this is reported from the second network to the first network. The transmitter of the first network is turned off.

Thereafter, the transmitter performs restart-trials by transmitting short restart-pulses during for example 2-9 seconds every 60-300 seconds. Restart pulses are transmitted from the first network towards the second network. After mending of the fiber, the second network will receive a restart pulse from the first network. A confirmation pulse is then sent back to the first network. The new status (fiber is repaired) is established by the first network which again activates its transmitter permanently. Amplifiers are often used to forward laser beams over long distances. Each amplifier in a chain between a transmitter and a receiver will be shut down after a fiber break. According to prior art, when restart pulses are transmitted, each amplifier in the chain will respond to every received restart pulse by starting up and transmit a laser beam to the next amplifier or to the final receiver. Until recently laser systems operate with a power around 17dBm which when existing only during the time of a restart-pulse is relatively harmless to a human eye. Due to need of more efficient long distance laser transportation, laser power over 17dBm has started to be used. A problem will arise, as the amplifiers will start to send at full effect during restart trials even though a fiber break still exists. A laser beam of more than 17dBm sent through a broken fiber can cause severe damage to a human eye, even though it exists only during the duration of a restart-pulse.

### SUMMARY OF THE INVENTION

A high power restart-pulse sent through a leaking fiber might cause severe damage to a human eye. The present invention solves the problem with high power laser leakage through a broken fiber in an optical system having laser amplifiers.

The problem is solved by the invention by, as a response to detection of a faulty fiber, repeatedly send out APSD-messages to amplifiers located between the terminals in the system. All amplifiers receiving an APSD-message are prevented from sending light at a power that might be dangerous to a human eye. As long as the messages are received, amplifiers are prevented from transmitting light at a risky level. As soon as the amplifiers no longer receive the APSD-messages i.e. after repair of the fiber, the amplifiers again are prepared to send at full power.

More in detail, the problem is solved by a method to reduce light leakage in an optical system comprising a first terminal and a second terminal. The terminals are prepared to communicate bi-directionally using light beams sent in optical fibers via light amplifiers. The method comprises steps like:
- Detection at the second terminal of loss of optical information sent from the first terminal.
- Sending of APSD-messages through amplifiers connected in series between the first and the second terminal.
- Effecting all light amplifiers receiving an APSD-message to transmit light power at eye safe power level.

When the broken fiber has been amended, optical information from the first terminal will be received at the second terminal. The APSD-messages are prevented from being sent from the terminals. All light amplifiers, which before received, but no longer receive any of the APSD-messages, are effected to again transmit light at full power.

An object of the present invention is to prevent hazardous laser leakage through a broken fiber.

An advantage with the invention is increased safety

Another advantage is that repairs can be made without violating eye safety regulations.

Another advantage is the easy way to make all transmitters and amplifiers connected in series in a chain between the terminals to work with reduced optical output power during restart after power shut down.

Yet another advantage is the guarantee that the link will be fully restored when repairs have been made on the optical fiber causing the problem.

The invention will now be described more in detail with reference to exemplifying embodiments thereof and also with reference to accompanying drawings.

### DESCRIPTION OF THE DRAWINGS

Figure 1 is a block schematic illustration of a wavelength division-multiplexing network WDM, between synchrony digital hierarchy networks SDH.
Figure 2 is a block schematic illustration according to the invention, illustrating a WDM network with amplifiers between two terminals, after a break in a fiber between two of the amplifiers.
Figure 3 is a flow chart disclosing the most important steps of the method according to the invention disclosed in figure 2.
Figure 4 is a block schematic illustration according to the invention, illustrating a WDM network with amplifiers between two terminals, after the break between the amplifiers has been amended.
Figure 5 is a flow chart disclosing the most important steps of the method according to the invention disclosed in figure 4.
Figure 6 is a block schematic illustration of an arrangement according to the invention.

### DESCRIPTION OF PREFERRED EMBODIMENTS

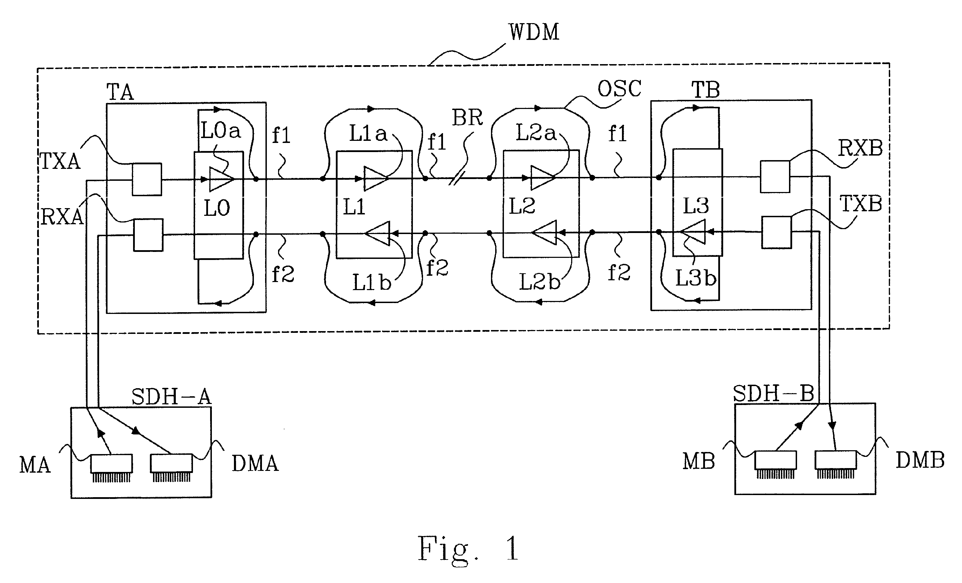

Figure 1 discloses an optical communication system comprising network equipment of Synchrony Digital Hierarchy type. A so-called first SDH equipment SDH-A and a second SDH equipment SDH-B are in this example connected to each other via a Wavelength Division Multiplexing network WDM. It is to be noted that the network types are of minor relevance to the general idea behind the invention. These networks are just to be seen as examples. Recently WDM-networks have been introduced between SDH-networks in order to use the fibers in a more efficient way. Wavelength Division Multiplexing WDM involves a set of traffic-bearing optical signals combined onto a single fiber pair. It is evident that these signals must not interact with each other during transmission and that they must be capable of being separated for reception at the far end. This is achieved by operating each optical signal on a separate wavelength. Signals arriving at the first equipment SDH-A are prepared in a multiplex MA and sent into a single fiber in the WDM-network. In the same way, after passing the WDM-network, the signal in the single optical fiber is taken care of in a de-multiplex DMB in the second equipment SDH-B and again transformed into the original traffic-bearing optical signals. In the same way, signals in the other direction are first prepared in a multiplex MB at the second equipment SDH-B and then sent into a single fiber through the WDM-network. The signal in the single optical fiber is thereafter de-multiplexed in the de-multiplex DMA in the first equipment SDH-A. The WDM network disclosed in figure 1 comprises two end terminals, a first end terminal TA and a second end terminal TB. The WDM network also comprises amplifiers L0, L1, L2 and L3 connected in series between the two terminals TA and TB i.e. L0 and L3 are parts of the terminals TA, TB as can be seen in figure 1. The amplifiers L1 and L2 are connected between the terminals TA and TB with optical fibers f1 and f2. The first terminal TA comprises a first transmitter TXA and a first receiver RXA while the second terminal TB comprises a second transmitter TXB and a second receiver RXB. Optical information sent from the first equipment SDH-A to the second equipment SDH-B is transmitted from the first transmitter TXA to the second receiver RXB in the fiber f1 via the amplifiers L0, L1, L2 and L3. In the same way, information sent from the second equipment SDH-B to the first equipment SDH-A is transmitted from the second transmitter TXB to the first receiver RXA in the fiber f2 via the amplifiers L3, L2, L1 and L0. The distance between each amplifier is in this example approximately 100km and the main purpose of the amplifiers is to amplify the light beam in the optical fiber in order to enable long distance light transfer. In figure 1 is disclosed an optical supervisory channel OSC. The purpose of the optical supervisory channel is to send control messages between the terminals TA and TB. The optical supervisory channel is separated from the ordinary optical fiber path. Messages sent in the optical supervisory channel do not pass the amplifiers. The optical supervisory channel makes it possible to send messages also after a break down of an amplifier.

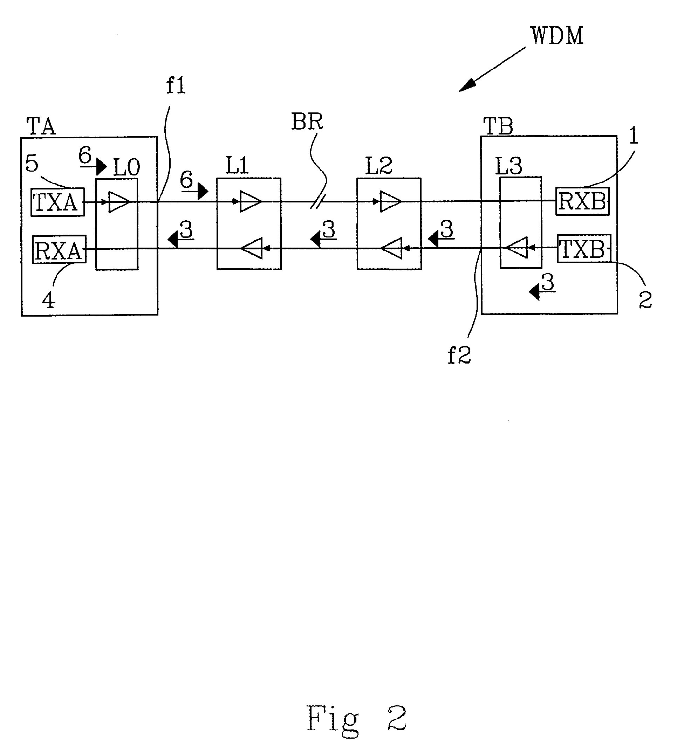

As a start, before discussing the actual invention, the problems with previously known technique will be high-lighted together with figure 1. As can be seen in figure 1, the fiber f1 is effected by an error BR between amplifier L1 and L2. The amplifier L2 will be shut down in direction terminal TB and the second terminal TB will detect a loss of optical power. According to prior art, the second transmitter TXB will then be shut down and the transmission of optical power is stopped. When the amplifiers L3, L2 and L1 detect loss of optical power, the amplifiers are shut down in direction terminal TA. In the same way, when the first terminal TA detects loss of incoming optical power, the first transmitter TXA will stop sending optical power and the amplifiers L0 and L1 will be shut down in direction towards the second terminal TB. Problem arises with the prior art solution when restart-pulses are transmitted from the first terminal TA. As soon as the amplifier L1 receives a restart pulse, it sends out a laser beam with full optical power. The laser will leak through the broken fiber. A laser beam with optical power above e.g. 17 dBm can cause severe damage to a human eye already after short time. If the fiber was amended, the second terminal will receive a restart-pulse and a confirmation pulse will be sent back from the second terminal towards the first terminal. The first terminal will continue to send permanently with full power but this does not cause any problem since the fiber is repaired. However, if the fiber was not repaired, the first terminal will stop to send at first after a specified time i.e. when definitely no confirmation pulse will arrive. In the mean time the terminal and all amplifiers in-between the terminals will send with full power. The invention, which will end these problems, will now be explained together with figure 2.

In figure 2, the same optical WDM network as was disclosed earlier in figure 1, is disclosed. A method according to the invention will now be explained more in detail. Events of more importance are shown in the figure with numerical references 1-6. As in the previous prior art example, a fiber break BR has occurred between amplifier L1 and amplifier L2. The method according to the invention comprises the following steps:
- Optical power from the amplifier L1 is prohibited to reach amplifier L2 due to the fiber break BR.
- The amplifier L2 is turned off in direction towards terminal TB due to lack of incoming optical power caused by the fiber break BR.
- Loss of optical power is detected 1 at the second receiver RXB in the second terminal TB.
- The second transmitter TXB is informed 2 of the loss of optical power detected at the second receiver RXB.
- An APSD-message 3 is sent out from the second transmitter TXB towards the first terminal TA. The message is sent in the earlier mentioned optical supervisory channel OSC. The channel OSC is not disclosed in figure 2.
- The amplifier L3 sets a flag, indicating that the APSD-message has been received. The flag is not shown in figure 2.
- The amplifier L3 decreases its optical power towards amplifier L2, to a value well below a value dangerous to a human eye. In this example the value is 17 dBm.
- The APSD-message 3 is forwarded from the amplifier L3 to the amplifier L2 in the optical supervisory channel OSC.
- The amplifier L2 sets a flag, indication that the APSD-message has been received.
- The amplifier L2 decreases its optical power to 17 dBm in direction L1.
- The APSD-message 3 is forwarded from the amplifier L2 to the amplifier L1 in the optical supervisory channel OSC.
- The amplifier L1 sets a flag, indicating that the APSD-message 3 has been received.
- The amplifier L1 decreases its optical power to 17 dBm in direction towards terminal TA.
- The APSD-message 3 is detected at the first terminal TA.
- The first transmitter TXA is informed 5 of the APSD-message received at the first receiver RXA.
- The APSD-message 3 is echoed from the first transmitter TXA towards the second terminal TB. The echoed APSD-message 6 is sent in the earlier mentioned optical supervisory channel OSC, not disclosed in figure 2.
- The amplifier L0 sets a flag, indicating that the echoed APSD-message 6 has been received. The flag is not visible in figure 2.
- The amplifier L0 decreases its optical power towards amplifier L1, to 17 dBm.
- The echoed APSD-message 6 is forwarded from the amplifier L0 to the amplifier L1 in the optical supervisory channel OSC.
- The amplifier L1 sets a flag, indicating that the echoed APSD-message 6 has been received.
- The amplifier L1 decreases its optical power to 17 dBm in direction L2.

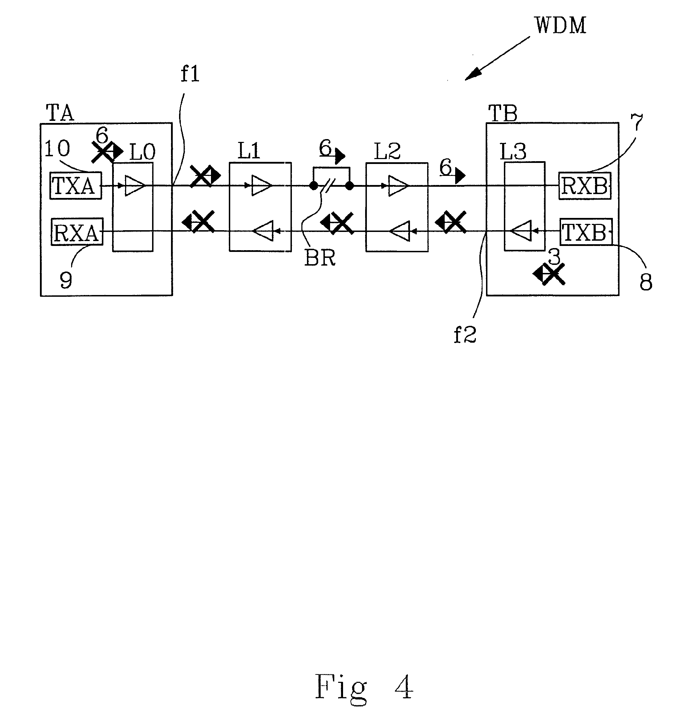

To sum up, every amplifier L0, L1, L2 and L3 that receives either the APSD-message or the echoed APSD-message goes into a low power mode in the same transmission direction as the APSD-message was transmitted towards. It is to be noted that the two directions are independent of each other. In the low power mode, laser radiation is harmless to a human eye. An amplifier will not leave the low power mode until both APSD-messages have disappeared. In figure 4, the second phase of the invention will be explained, i.e. the phase that starts when the fiber has been amended.

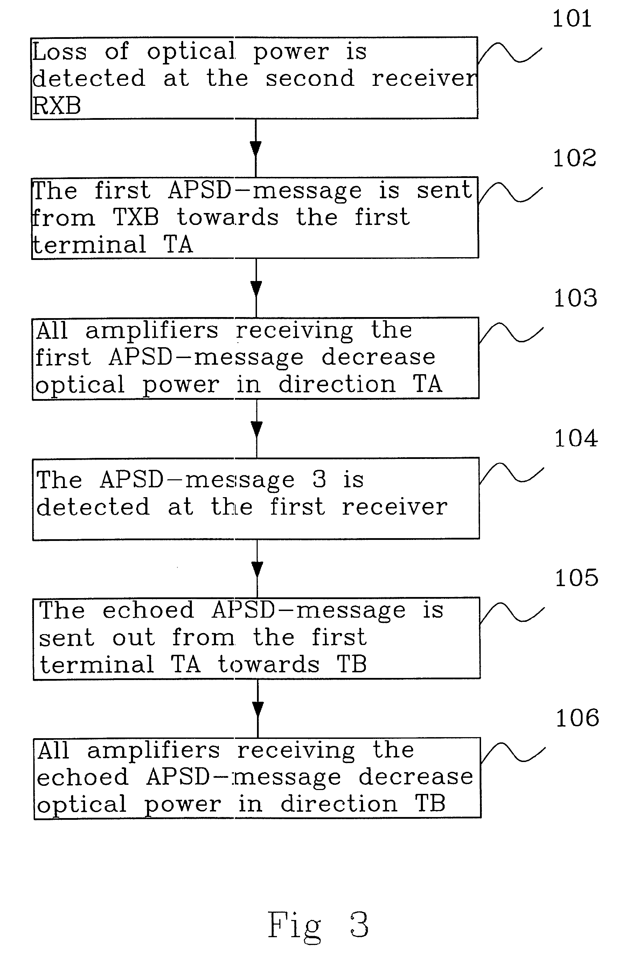

In figure 3 the most essential steps of the method are shown in a flow chart. The flow chart is to be read together with the earlier shown figures 1 and 2. The most essential steps are as follows:
- Loss of optical power is detected at the second receiver RXB in the second terminal TB. This is disclosed in figure 3 with a block 101.
- The APSD-message 3 is sent out from the second transmitter TXB towards the first terminal TA. This is shown in the figure with a block 102.
- All amplifiers receiving the APSD-message decrease optical power in direction towards the first terminal TA, to a value well below a value dangerous to a human eye. This is disclosed in figure 3 with a block 103.
- The APSD-message 3 from the second terminal is detected 4 at the first receiver RXA in the first terminal TA. This is disclosed in figure 3 with a block 104.
- The echoed APSD-message 6 is sent out from the first transmitter TXA towards the second terminal TB. This is disclosed in figure 3 with a block 105.
- All amplifiers receiving the echoed APSD-message decrease optical power in direction towards the second terminal TB, to a value well below a value dangerous to a human eye. This is disclosed in figure 3 with a block 106.

Note that both TA and TB can run in parallel using the same procedure. As long as any APSD-message is received, amplifiers will have low power in the same direction as the received APSD-message was sent towards.

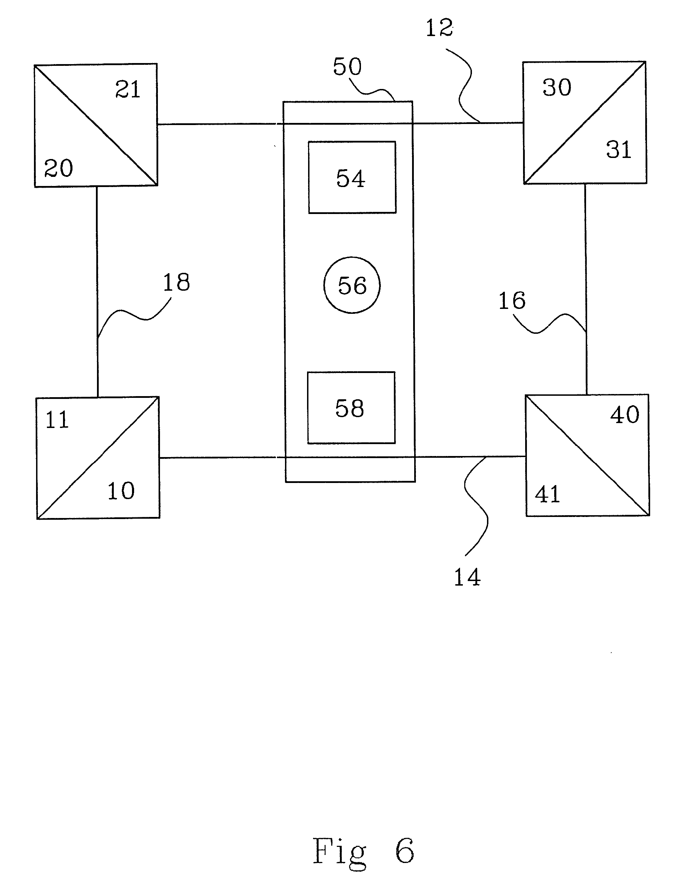

In figure 4 the same optical WDM network is disclosed as earlier was disclosed in figure 2. The fiber f1 that before was broken has now been amended. This is shown with a shortcut over the break symbol BR. Like before, events of importance are high-lighted in the figure with numerical references 6-10. The method comprises the following steps:
- The amplifier L2 sets a flag, indicating that the echoed APSD-message is received.
- The amplifier L2 will start to run at a reduced power level in the same direction as the echoed APSD-message 6 was sent towards.
- The amplifier L3 sets a flag, indicating that the echoed APSD-message is received.
- The receiver RXB in the second terminal TB receives 7 the echoed APSD-message 6 transmitted from the first terminal TA.
- The transmitter TXB belonging to the second terminal TB suppresses 8 the sending of the APSD-message 3.
- The amplifier L3 sets a flag, indication that the APSD-message 3 transmitted from the transmitter TXB, no longer is received. The flag is not visible in figure 2.
- The amplifier L3 starts a timer. The timer is not visible in figure 2 (only in figure 6). The timer is set as soon as the missing APSD-message is notified. If the timer later lapse without any new APSD-message has been detected, the amplifier L3 will start to send with full power. The purpose of the timer is to avoid not properly repaired fibers i.e. to avoid glitches. It is to be noted that all amplifiers L0, L1, L2 and L3 works in the same way, starting their timer as soon as a missing APSD-message or echoed APSD-message has been noted. In order to simplify the description, this function has only been described above together with amplifier L3.
- The amplifier L2 sets a flag, indication that the APSD-message 3 no longer is received.
- The amplifier L2 will start to run at a high power level in the same direction as the APSD-message 3 earlier was sent towards (i.e. after lapse of the timer as mentioned above, like for all amplifiers L0-L3).
- The amplifier L1 sets a flag, indication that the APSD-message no longer is received.
- The amplifier L1 will start to run at a high power level in the same direction as the APSD-message 3 earlier was sent towards.
- The receiver RXA ir. the first terminal TA indicates 9 that the APSD-message 3 transmitted from the second terminal TB no longer is received.
- The transmitter of the first terminal TA suppresses the sending of the echoed APSD-message 6.
- The amplifier L0 sets a flag, indicating that the echoed APSD-message no longer is received.
- The amplifier L0 starts to transmit at full optical power towards the second terminal TB.
- The amplifier L1 sets a flag, indication that the echoed APSD-message 6 no longer is received.
- The amplifier L1 starts to transmit at full optical power towards the second terminal TB.
- The amplifier L2 sets a flag, indication that the echoed APSD-message 6 no longer is received.
- The amplifier L2 starts to transmit at full optical power towards the second terminal TB.
- The second receiver RXB detects that the echoed APSD-message 6 no longer is present.
- To sum up, every amplifier L0, L1, L2 and L3 that does not receive any of the two APSD-messages will leave the low power mode and start to transmit at full optical power. The purpose of the timers in the amplifiers L0-L3 is to avoid glitches i.e. to avoid not properly repaired fibers. An amplifier will not leave the low power mode in both directions until both APSD-messages have disappeared. In case of a bi-directional fault, the same algorithm is used in both directions.

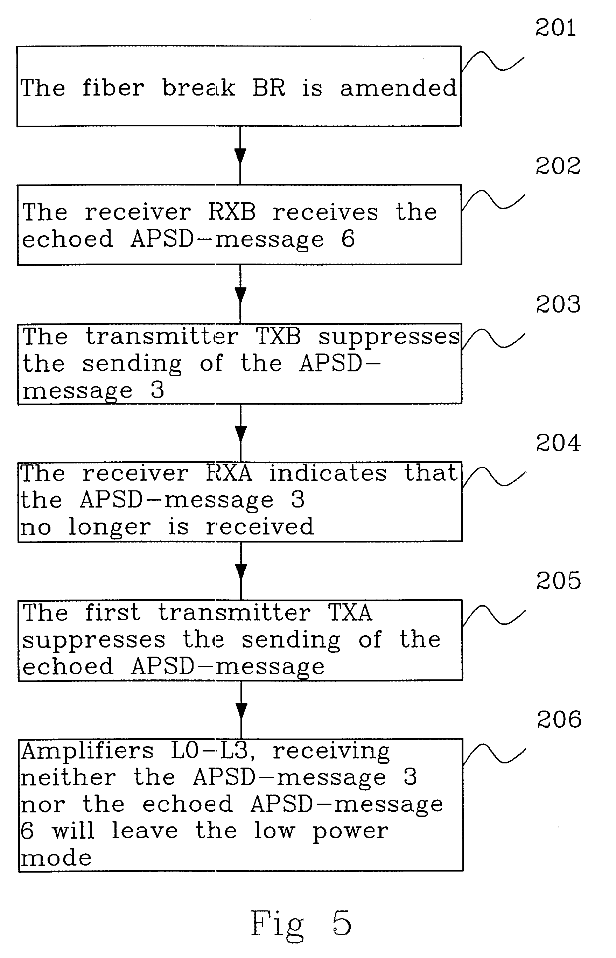

In figure 5 the most essential steps of the method are shown in a flow chart. The flow chart is to be read together with the earlier shown figures 1 and 3. The most essential steps are as follows:
- The fiber break BR is amended. This is disclosed in figure 5 with a block 201.
- The receiver RXB in the second terminal TB receives 7 the echoed APSD-message 6 transmitted from the first terminal TA. This is disclosed in figure 5 with a block 202.
- The transmitter TXB belonging to the second terminal TB suppresses 8 the sending of the APSD-message 3. This is disclosed in figure 5 with a block 203.
- The receiver RXA in the first terminal TA indicates 9 that the APSD-message 3 transmitted from the second terminal TB no longer is received. This is disclosed in figure 5 with a block 204.
- The first transmitter TXA suppresses the echoing of the echoed APSD-message 6. This is disclosed in figure 5 with a block 205.
- Amplifiers L0-L3 receiving neither the APSD-message 3 nor the echoed APSD-message 6 will leave the low power mode. This is disclosed in figure 5 with a block 206.

Figure 6 discloses a laser shut down arrangement according to the invention. The arrangement comprises detection devices 10 and 30, detecting either the presence of optical information or the loss S of optical information. The shut down arrangement also comprises information devices 11 and 31 informing so-called receiving devices 20 and 40 of the new status i.e. either receiving or not receiving optical information. The shut down arrangement also comprises sending devises 21 and 41 arranged either to transmit APSD-messages or to prevent sending APSD-messages. The arrangement also comprises amplifiers of which one amplifier 50 is disclosed in figure 6. The amplifier comprises a first flag 54 that is set if an APSD-message has been received. The arrangement also comprises a second flag 58 that is set if an echoed APSD-message has been received. If a timer 56 lapses without any new APSD-message or echoed APSD-message has been received, the flag representing the not come APSD-message is re-establish.

Different variations are possible within the scope of the invention. For example, instead of prevent sending the APSD-message or the echoed APSD-message, it is possible to send different kind of messages informing of the new situation. As already have been mentioned different kinds of communication networks are possible to use out of the ones already mentioned. Another possible variation is to shut down an amplifier in both directions at the same time, as soon as one of the APSD-messages has been detected. Different shut down power levels can also be used. For example can an amplifier be completely shut down or the amplifier can be partly shut down until an eye safe level has been reached. It is to be noted that in case of a bi-directional fault, the same algorithm is used in both directions. As already mentioned, the amplifiers that have been drawn as parts of the terminals, are parts of the transmitters in the terminals.

The invention is thus not restricted to the above described and illustrated exemplifying embodiments, and modifications can be made within the scope of the claims.

## Claims

1. Method to reduce light leakage in an optical system comprising a first terminal (TA) and a second terminal (TB), which terminals are prepared to communicate bidirectionally using light beams sent in optical fibers (f1, f2) via light amplifiers (L0, L1, L2, L3), where at least one of the fibers is effected by an error (BR), which method comprises the following steps:
- detecting at the second terminal (TB), loss of optical information sent from the first terminal (TA);
which method is ***characterized by*** the following steps:
- sending an APSD-message (3) from the second terminal (TB) towards the first terminal (TA);
- effecting all light amplifiers (L0, L1, L2, L3) receiving the APSD-message (3) to transmit light power towards the first terminal (TA) at a defined eye safe power level.

2. Method to reduce light leakage according to claim 1, which method comprises the following further steps:
- sending an echoed APSD-message (6) from the first terminal (TA) towards the second terminal (TB);
- effecting all light amplifiers (L0, L1, L2, L3) receiving the echoed APSD-message (6), to transmit light power towards the second terminal (TB) at eye safe power level.

3. Method to reduce light leakage according to claim 2, which method comprises the following further step:
- detecting at the first terminal (TA) of the APSD-message (3) sent from the second terminal (TB).

4. Method to reduce light leakage according to claim 3, which method comprises the following further steps:
- ceasing of the error (BR);
- detecting at the second terminal (TB) of light power received from the first terminal (TA);
- prevent sending of the APSD-message (3) from the second terminal (TB) towards the first terminal (TA);
- effecting all light amplifiers (L0, L1, L2, L3) which no longer receive the APSD-messages (3) to transmit light at increased power in direction towards the first terminal (TA)

5. Method to reduce light leakage according to claim 4, which method comprises the following steps:
- prevent sending of the echoed APSD-message (6);
- effecting all light amplifiers (L0, L1, L2, L3) which do no longer receive the echoed APSD-messages (6) to transmit light at increased power in direction towards the second terminal (TB).

6. Method to reduce light leakage according to claim 4 or 5, whereby the increased power transmission is preceded by the lapse of a timer.

7. Method to reduce light leakage in an optical system comprising a first terminal (TA) and a second terminal (TB), which terminals are prepared to communicate bidirectionally using light beams sent in optical fibers (f1, f2) via light amplifiers (L0, L1, L2, L3), whereby at least one of the optical fibers is effected by an error (BR) that prevents communication, ***characterized by*** an APSD-message (3) sent from the second terminal (TB) towards the first terminal (TA), which method comprises the following steps:
- ceasing of the error (BR);
- detecting at the second terminal (TB) of light power received from the first terminal (TA);
- prevent sending of the APSD-message (3) from the second terminal (TB) towards the first terminal (TA);
- effecting all light amplifiers (L0, L1, L2, L3) which no longer receive the APSD-messages (3) to transmit light at full power in direction towards the first terminal (TA).

8. Method according to claim 7, whereby an echoed APSD-message (6) is sent of from first terminal (TA) towards the second terminal (TB), which method comprises the following steps:
- prevent sending of the echoed APSD-message (6);
- effecting all light amplifiers (L0, L1, L2, L3) which do no longer receive the echoed APSD-messages (6) to transmit light at full power in direction towards the second terminal (TB).

9. Arrangement to reduce light leakage in an optical system comprising a first terminal (TA) and a second terminal (TB), which terminals are prepared to communicate bidirectionally with each other using light beams sent in optical fibers (f1, f2) via light amplifiers (L0, L1, L2, L3), which arrangement comprises:
- means to detect at the second terminal (TB), loss of optical information sent from the first terminal (TA), due to an error (BR);
- ***characterized by*** means to send an APSD-message (3) from the second terminal (TB), via one of the optical fibers (f1, f2), towards the first terminal (TA);
- means to effect all light amplifiers (L0, L1, L2, L3) receiving the APSD-message (3) to transmit light power towards the first terminal (TA) at a defined eye safe level.

10. Arrangement to reduce light leakage according to claim 9, which arrangement comprises:
- means to send an echoed APSD-message (6) from the first terminal (TA), via one of the optical fibers (f1, f2), towards the second terminal (TB);
- means to effect all light amplifiers (L0, L1, L2, L3) receiving the echoed APSD-message (6), to transmit light power towards the second terminal (TB) at eye safe level.

11. Arrangement to reduce light leakage according to claim 10, which arrangement comprises:
- means to detect at the first terminal (TA), the presence of the APSD-message (3) sent from the second terminal (TB).

12. Arrangement to reduce light leakage in an optical system comprising a first terminal (TA) and a second terminal (TB), which terminals are prepared to communicate bidirectionally using light beams sent in optical fibers (f1, f2) via light amplifiers (L0, L1, L2, L3), which arrangement comprises:
- means to detect at the second terminal (TB), light power received from the first terminal (TA);
- ***characterized by*** means to prevent sending an APSD-message (3) from the second terminal (TB) towards the first terminal (TA);
- means to prevent sending an echoed APSD-message (6) from the first terminal (TA) towards the second terminal (TB);
- means located in the light amplifiers used to detect presence of APSD-messages (3, 6);
- means to effect all light amplifiers (L0, L1, L2, L3) which do no longer receive APSD-messages (3, 6), to transmit light at full power.
